(19)

Europäisches
Patentamt
European
Patent Office
Office européen
des brevets

(11)  EP 4 474 256 A1

(12)  **EUROPEAN PATENT APPLICATION**

(43) Date of publication:
     **11.12.2024  Bulletin 2024/50**

(21) Application number: **23178009.9**

(22) Date of filing: **07.06.2023**

(51) International Patent Classification (IPC):
     ***B62D 35/00*** *(2006.01)*

(52) Cooperative Patent Classification (CPC):
     **B62D 35/00**

(84) Designated Contracting States:
     **AL AT BE BG CH CY CZ DE DK EE ES FI FR GB
     GR HR HU IE IS IT LI LT LU LV MC ME MK MT NL
     NO PL PT RO RS SE SI SK SM TR**
     Designated Extension States:
     **BA**
     Designated Validation States:
     **KH MA MD TN**

(71) Applicant: **Volvo Car Corporation
     405 31 Göteborg (SE)**

(72) Inventor: **ORBAY, Raik
     40531 Göteborg (SE)**

(74) Representative: **Maiwald GmbH
     Engineering
     Elisenhof
     Elisenstrasse 3
     80335 München (DE)**

Remarks:
     Amended claims in accordance with Rule 137(2)
     EPC.

(54)  **METHOD FOR REDUCING DRAG OF A VEHICLE, DATA PROCESSING APPARATUS, COMPUTER PROGRAM, COMPUTER-READABLE STORAGE MEDIUM, VEHICLE HEATING SYSTEM AND USE**

(57)     The disclosure relates to a method for reducing drag ($F_{Drag}$) of a vehicle (10). The method comprises causing a vehicle heating system (12) to heat at least a portion of an outer surface (11) of the vehicle (10). Moreover, the disclosure relates to a data processing apparatus (20), a vehicle heating system (12), a computer program (28) and a computer-readable storage medium (26). The disclosure is further directed to a use of a vehicle heating system (12) for reducing drag ($F_{Drag}$) of a vehicle (10) comprising the vehicle heating system (12).

(Figure 1)

Fig. 1

EP 4 474 256 A1

**Description**

The present disclosure relates to a method for reducing drag of a vehicle.

The present disclosure is further directed to a data processing apparatus, a computer program, and a computer-readable storage medium.

Moreover, the present disclosure relates to a vehicle heating system.

Additionally, the present disclosure relates to a use of a vehicle heating system.

One of the mechanical resistances a vehicle needs to overcome in order to be able to move is drag, e.g. air drag. As is generally known, drag increases as a quadratic function of a traveling speed of the vehicle. Thus, the mechanical resistance resulting from drag is more important at comparatively high vehicle speeds.

The drag partly depends on environmental conditions and partly depends on characteristics of the vehicle. Therefore, a known approach to increase energy efficiency of a vehicle is to reduce the drag, e.g. by geometrically streamlining an outer contour of the vehicle or by providing smooth outer surfaces of the vehicle. The reduced drag has the effect that a driving range being provided by a defined energy quantity is increased. In a battery electric vehicle, the energy quantity may be defined by a full charge of the battery pack. In a vehicle having a combustion engine, the energy quantity may be defined by the energy content of a full volume of fuel in a fuel reservoir.

It is an objective of the present disclosure to further reduce the drag of a vehicle.

The problem is at least partially solved or alleviated by the subject matter of the independent claims of the present disclosure, wherein further examples are incorporated in the dependent claims.

According to a first aspect, there is provided a method for reducing drag of a vehicle. The method comprises causing a vehicle heating system to heat at least a portion of an outer surface of the vehicle. Thus, an outer surface of the vehicle may be heated using the vehicle heating system. In this context, a vehicle heating system is a heating system that forms an integral part of the vehicle, i.e. a heating system that is integrated into the vehicle. This also means that the components of the heating system are located inside the vehicle. The heating system may already be available. Heating a portion of the outer surface of the vehicle has the effect that a boundary layer of fluid, e.g. air, being located adjacent to the heated outer surface of the vehicle is heated as well. Consequently, a density of the fluid in the boundary layer is reduced. Since drag is a function of the density of the fluid in the boundary layer, heating the outer surface of the vehicle reduces the drag. Altogether, using this method offers a simple and reliable way to reduce drag and, thus, to increase the efficiency of a vehicle.

The above-mentioned effect may be best understood when considering the following formula for calculating drag or, more precisely, a drag force:

$$F_{Drag} = \frac{1}{2}c\rho A v^2$$

In the above formula $F_{Drag}$ is a drag force, c is a constant drag coefficient, A is a reference area of the vehicle, $\rho$ is the density of the fluid in the boundary layer and v is the travelling speed of the vehicle.

In case the fluid surrounding the vehicle is air, the drag may as well be called air drag. Also other gases, vapor, rain and/or particles may be present in the surroundings of the vehicle. In order to reflect this situation, the more general term drag will be used in the following. Nevertheless, one important example of drag is air drag.

In an example, the outer surface of the vehicle is a window surface. In another example, the outer surface of the vehicle is a body surface such as a top surface of a roof, a top surface of a trunk lid or a top surface of a hood. Also combinations of these surfaces may be heated.

In an example in which two or more portions of the outer surface of the vehicle are caused to be heated, the heating may be done in a sequential or in a simultaneous fashion.

In an example, the vehicle is a battery electric vehicle. Thus, in this example, a driving range of the battery electric vehicle is increased if the above method is applied.

According to an example, causing the vehicle heating system to heat at least a portion of the outer surface of the vehicle comprises heating the outer surface using a constant heating power. Alternatively, causing the vehicle heating system to heat at least a portion of the outer surface of the vehicle comprises heating the outer surface using pulsated heating power. Using constant heating power is a simple and reliable way to provide the heating power. Using pulsated heating power allows to heat the outer surface of the vehicle in a highly efficient manner.

In an example, the vehicle heating system comprises a window heating system. This means that the outer surface of the vehicle is heated using the window heating system. Using the window heating system, one or more windows of the vehicle and the corresponding outer window surfaces can be heated. To this end, known in-vehicle components of window heating systems may be used, they just need to be controlled in a manner according to the present disclosure. The implementation of the method according to the present disclosure is, thus, simple since known window heating systems can be enhanced by the functionality according to the present disclosure. New hardware may not be necessary.

In an example, the window heating system comprises a front window heater.

In another example, the window heating system comprises a rear window heater.

In another example, the window heating system comprises a side window heater.

According to an example, the window heating system comprises a heating element attached to a window of the vehicle or at least partially integrated into a window of the vehicle. In case the heating element is attached to the window of the vehicle, the heating element may be attached to an interior side of the window. In both alternatives, i.e. if the heating element is attached to the window or at least partially integrated into the window, the heating element is provided in close proximity to the outer surface to be heated. Thus, the outer surface may be heated in an efficient manner.

According to an example, the vehicle heating system is automatically caused to heat the at least one portion of the outer surface of the vehicle. This means that a specific action of a user of the vehicle is not required in order to cause the vehicle heating system to heat the outer surface of the vehicle. Thus, user comfort is high and at the same time, the drag may be reduced by the method of the present disclosure whenever appropriate. In this context, the vehicle heating system may be activated as a function of at least one environmental condition and/or at least one driving condition of the vehicle. These conditions may be determined by suitable sensors.

In an example, the method further comprises

- receiving ambient temperature data being indicative of an ambient temperature, and

- causing the vehicle heating system to heat the at least one portion of the outer surface of the vehicle to a temperature exceeding the ambient temperature.

Consequently, the density of the fluid in the boundary layer adjacent to the outer surface of the vehicle is reduced as compared to a situation without using the vehicle heating system. Thus, the efficiency of the vehicle is increased.

For example, the vehicle heating system is caused to heat the outer surface only if the received ambient temperature equals or is inferior to a predefined ambient temperature threshold. The ambient temperature threshold is for example 20°C, 15°C, 10°C, 5°C or 0°C. Since at comparatively low temperatures, the density of the fluid in the boundary layer is comparatively high, the effect which is produced by the method of the present disclosure is potentially larger if the ambient temperature is lower. Considering the predefined ambient temperature threshold, thus, ensures that the drag is reliably reduced.

In an example, the method further comprises deciding which surface or surfaces are to be heated. Alternatively, the method may comprises deciding which part or parts of an outer surface are to be heated. In this context, also an order of surfaces or parts of surfaces to be heated may be determined, i.e. it may be determined which surface or part of a surface is to be heated first, which surface or part of a surface is to be heated second, etc. Based on this decision, the selected surface or the selected surfaces may be heated. The same applies to parts of surfaces. Not heating all surfaces or parts of surfaces at the same time may be called asynchronous heating. Thus, situational heating is possible, thereby realizing a situation-sensitive reduction of drag.

In a further example, heated surfaces or surface parts may be activated following a time lapse. Additionally or alternatively, a vehicle speed and/or other driving conditions may be considered. In this context, for example a front surface may be caused to be heated first, thereafter a side surface and after that a rear surface. In order to do so different activation times per surface may be implemented.

According to another example, the method further comprises selecting a heating mode. As has been explained before, the heating system may be caused to heat at least a portion of an outer surface using a constant heating power. Alternatively, causing the vehicle heating system to heat at least a portion of the outer surface of the vehicle may comprise heating the outer surface using pulsated heating power. Thus, the appropriate heating mode may be selected.

In a further example, the method further comprises checking whether an abandoning condition is met. In this context, an abandoning condition is a condition under which the method is to be abandoned. In simplified fords, the abandoning condition may be called a switch off condition or a turn off condition. The checking may be performed regularly or event-based. Consequently, the method is configured to automatically be abandoned under predefined conditions. An abandoning condition for example relates to a sudden acceleration request or a sudden acceleration of the vehicle. In this case, the method is abandoned in order not to consume energy for reducing the drag. Another abandoning condition for example relates to a low state of charge of a vehicle battery. Thus, abandoning the method leads to energy savings. In a further example, an abandoning condition relates to a low state of health of the vehicle battery and/or a component used for executing the method of the present disclosure. In such a case an error likelihood is increased and, thus, by abandoning the method errors are avoided. In another example, an abandoning condition relates to a driving condition, e.g. to a situation in which the vehicle is driving on a road with a slope exceeding a predefined slope threshold. In this case, the method is abandoned in order not to consume energy for reducing the drag. It is understood that the mentioned examples of abandoning conditions may be used individually or in any possible combination. Altogether, the method of the present disclosure may be abandoned automatically, if appropriate.

In an example, the method further comprises

- receiving vehicle speed data being indicative of a traveling speed of the vehicle, and

- causing the vehicle heating system to heat the at least one portion of the outer surface of the vehicle based on the vehicle speed data.

As has been explained before, drag is a quadratic function of the speed. Thus, the effect which is produced by the method of the present disclosure is potentially larger at higher vehicle speeds. Consequently, causing the vehicle heating system to be operated based on vehicle speed data ensures that the drag is reliably reduced.

According to an example, causing the vehicle heating system to heat the at least one portion of the outer surface of the vehicle based on the vehicle speed data comprises causing the vehicle heating system to heat the at least one portion of the outer surface of the vehicle if the traveling speed exceeds a predefined speed threshold. As has been explained before, drag is a quadratic function of the speed. Thus, the effect which is produced by the method of the present disclosure is potentially larger at higher vehicle speeds. Consequently, a significant reduction of drag is achieved.

In an example, the predefined speed threshold corresponds to a design speed of the vehicle, i.e. a speed for which the power train and/or the contour of the vehicle is geometrically streamlined in order to reduce drag.

According to an example, the predefined speed threshold is 50 km/h or 60 km/h. This may be the case for a city vehicle having an outer contour which is geometrically streamlined for a reference speed of 50 km/h or 60 km/h. Thus, using the method of the present disclosure keeps the drag comparatively small even though the vehicle is operated at speeds beyond its design point.

According to another example, the predefined speed threshold is 80 km/h or 90 km/h or 100 km/h. This may be the case for a comparatively large vehicle such as a sedan or SUV having an outer contour which is geometrically streamlined for a reference speed of 80 km/h or 90 km/h or 100 km/h. Thus, using the method of the present disclosure keeps the drag comparatively small even though the vehicle is operated at speeds beyond its design point.

According to an example, causing the vehicle heating system to heat the at least one portion of the outer surface of the vehicle based on the vehicle speed data comprises increasing a reference temperature of the vehicle heating system and/or increasing a reference heating power of the vehicle heating system as a function of the vehicle speed data. Thus, if the traveling speed increases, the reference temperature of the vehicle heating system or the reference heating power increases. This means that a heating intensity is higher at higher traveling speeds. This takes into account that drag increases as a quadratic function of the vehicle speed. Thus, by using the present method, the effect of reduced drag due to heating the outer surface is higher at higher speeds. Overall, a comparatively small drag is achieved.
In an example, the method further comprises

- receiving vehicle speed prediction data being indicative of a future traveling speed of the vehicle, and
- causing the vehicle heating system to heat the at least one portion of the outer surface of the vehicle based on the vehicle speed prediction data.

Consequently, even in a case in which the vehicle heating system is subject to latencies, heating the outer surface may be performed as a function of a vehicle speed. This allows for a substantial or pronounced reduction of the drag. In this context, the vehicle speed prediction data may be received from a navigation system. In this case, the vehicle speed prediction data may be based on a destination input and a calculated route. Based on the destination input and the calculated route, a speed profile can be predicted for the entire route or parts of the route. Additionally or alternatively, vehicle speed prediction data may be provided as a function of driver behavior.

In an example, the method further comprises balancing gains in drag reduction to energy costs of heated-surface usage. This may be done based on a route the driver is setting in the GPS. Thus an overall increase of efficiency is ensured.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module, cloud computing unit, edge computing device, etc., which may also be a distributed computer system. The data processing means or the computer, respectively, may comprise one or more of a processor, a memory, a data interface, or the like.

According to a second aspect, there is provided a data processing apparatus comprising means for carrying out the method of the present disclosure. Using such a data processing apparatus may cause the vehicle heating system to heat the outer surface of the vehicle. As has been explained before, this has the effect that a density of the fluid in the boundary layer adjacent to the outer surface is reduced and drag is reduced. Altogether, using this data processing apparatus offers a simple and reliable way to reduce drag and, thus, to increase the efficiency of a vehicle.

It is understood that the data processing apparatus may be configured to be arranged in a vehicle. Alternatively, the data processing apparatus may be formed as a cloud unit or an edge computing device. It is also possible to have combinations of a data processing apparatus arranged in a vehicle and/or a cloud unit and/or an edge computing device. In such a case, each device only executes some of the steps of the method according to the present disclosure.

According to a third aspect, there is provided a vehicle heating system configured to be integrated into a vehicle and comprising a data processing apparatus according to the present disclosure. Using such a vehicle heating system, the outer surface of the vehicle may be heated. As has been explained before, this has the effect that a density of the fluid in the boundary layer adjacent to the outer surface is reduced and drag is reduced. Altogether, using such a heating system offers a simple and reliable way to reduce drag and, thus, to increase the efficiency of a vehicle.

The vehicle heating system may comprise at least one heating element.

The vehicle heating system may be a window heating system.

In an example, the window heating system comprises a front window heater.

In another example, the window heating system comprises a rear window heater.

In another example, the window heating system comprises a side window heater.

According to a fourth aspect, there is provided a computer program comprising instructions which, when the computer program is executed by a computer, cause the computer to carry out the method of the present disclosure. Using such a computer program may cause the vehicle heating system to heat the outer surface of the vehicle. As has been explained before, this has the effect that a density of the fluid in the boundary layer adjacent to the outer surface is reduced and drag is reduced. Altogether, using this computer program offers a simple and reliable way to reduce drag and, thus, to increase the efficiency of a vehicle.

According to a fifth aspect, there is provided a computer-readable storage medium comprising instructions which, when executed by a computer, cause the computer to carry out the method of the present disclosure. Using such a computer-readable storage medium may cause the vehicle heating system to heat the outer surface of the vehicle. As has been explained before, this has the effect that a density of the fluid in the boundary layer adjacent to the outer surface is reduced and drag is reduced. Altogether, using this computer-readable storage medium offers a simple and reliable way to reduce drag and, thus, to increase the efficiency of a vehicle.

According to a sixth aspect, there is provided a use of a vehicle heating system for reducing drag of a vehicle comprising the vehicle heating system. Using the vehicle heating system, the outer surface of the vehicle may be heated. As has been mentioned before, the vehicle heating system may be of a known kind such that no new hardware components may be necessary. As has also been explained before, this has the effect that a density of the fluid in the boundary layer adjacent to the outer surface is reduced and drag is reduced. Altogether, a simple and reliable way is provided to reduce drag and, thus, to increase the efficiency of a vehicle.

It is noted that according to the present disclosure, the vehicle heating system is specifically used to reduce drag.

In an example, the vehicle heating system is a window heating system. In another example, the window heating system comprises a heating element attached to a window of the vehicle or at least partially integrated into a window of the vehicle.

It should be noted that the above examples may be combined with each other irrespective of the aspect involved. In particular all the examples which have been mentioned in connection with the method according to the present disclosure may be combined with the use according to the present disclosure and vice versa.

These and other aspects of the present disclosure will become apparent from and elucidated with reference to the examples described hereinafter.

Examples of the disclosure will be described in the following with reference to the following drawing.

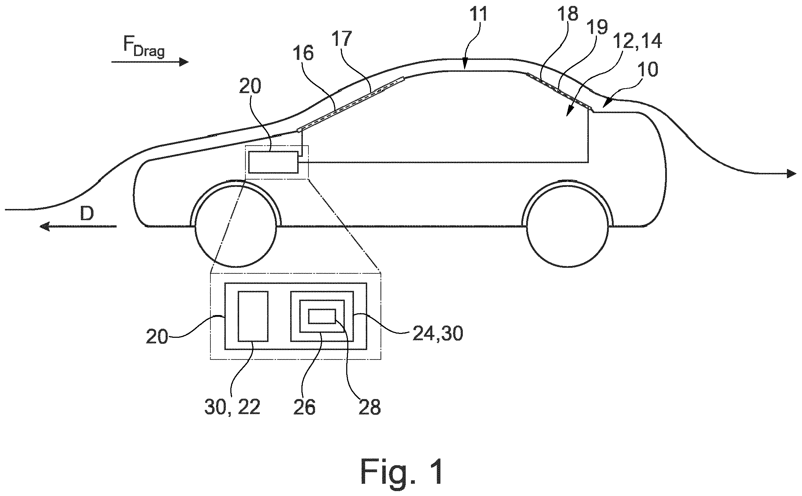

Figure 1 shows a vehicle comprising a vehicle heating system according to the present disclosure, a data processing apparatus according to the present disclosure, a computer program according to the present disclosure and a computer-readable storage medium according to the present disclosure, wherein the vehicle heating system may be used for reducing drag of the vehicle in accordance with the present disclosure and a method according to the present disclosure for reducing drag may be executed on the vehicle.

The Figure is merely a schematic representation and serves only to illustrate examples of the disclosure. Identical or equivalent elements are in principle provided with the same reference signs.

Figure 1 shows a vehicle 10 which is traveling along a forward driving direction D.

In the present example, the vehicle 10 is traveling in ambient air. Thus, it is subject to a drag denoted $F_{Drag}$. In the present case, the drag is an air drag. A stream of air flowing relative to the vehicle 10 is represented by a single line substantially following the outer contour of the vehicle 10.

The vehicle 10 comprises a vehicle heating system 12 which is a window heating system 14 in the present example.

The window heating system 14 comprises a front heating element 16 which is integrated into a windshield 17 of the vehicle 10.

Moreover, the window heating systems 14 comprises a rear heating element 18 which is integrated into a rear window 19 of the vehicle 10.

Both the front heating element 16 and the rear heating element 18 may comprise fine electric wires being integrated in the windshield 17 or the rear window 19 respectively, e.g. in a meandering manner. Since the wires are fine and comparatively large distances are provided between adjacent strings of the electric wires, such electric wires do not hinder a user of the vehicle from looking through the windshield 17 or rear window 19 respectively.

More generally speaking, a portion of an outer surface 11 of the vehicle 10 may be heated using the vehicle heating system 12.

The vehicle heating system 12 additionally comprises a data processing apparatus 20.

The data processing apparatus 20 is communicatively connected to the front heating element 16 and to the rear heating element 18. The data processing apparatus 20 is configured to control operation of the front heating element 16 and the rear heating element 18. Consequently, the data processing apparatus 20 may as well be referred to as a heating system control unit.

The data processing apparatus 20 is integrated into the vehicle 10.

Since also the front heating element 16 and the rear heating element 18 are integrated into the vehicle 10, the entire vehicle heating system 12 is integrated into the vehicle 10.

The data processing apparatus 20 comprises a data processing unit 22 and a data storage unit 24.

The data storage unit 24 comprises a computer-readable storage medium 26.

On the computer-readable storage medium 26 and, thus, also on the data storage unit 24, there is provided a computer program 28.

The computer program 28 and also the computer-readable storage medium 26 comprise instructions which, when executed by the data processing unit 22 or, more generally, a computer, cause the data processing unit 22 or the computer to carry out a method for reducing drag of the vehicle 10.

Consequently, the data processing unit 22 at the data storage unit 24 form means 30 for carrying out the method for reducing drag of the vehicle 10.

In the following, the method for reducing drag of the vehicle 10 will be explained in accordance with different use cases.

In a first use case, the method comprises receiving ambient temperature data being indicative of an ambient temperature. To this end, an ambient temperature sensor may be provided. The ambient temperature sensor is communicatively connected to the data processing apparatus 20. Since ambient temperature sensors for vehicles are generally known, such a sensor is not represented in the Figure.

Subsequently, the vehicle heating system 12 is caused to heat the windshield 17 or front window and the rear window 19, i.e. a portion of the outer surface 11 of the vehicle 10. The vehicle heating system 12 is caused to heat the windshield 17 or front window and the rear window 19 to a temperature exceeding the ambient temperature.

In the present example, the vehicle heating system 12 is caused to heat the windshield 17 or front window and the rear window 19 to 45°C, under the condition that the received ambient temperature data indicate an ambient temperature of less than 45°C.

Thus, ambient air in a boundary layer of air adjacent to the windshield 17 or front window and to the rear window 19 is heated via the windshield 17 or front window and the rear window 19. This reduces the density of the air in the boundary layer which has the effect that air drag of the vehicle 10 is reduced.

In a second use case, vehicle speed data indicative of a traveling speed of the vehicle 10 is received at the data processing apparatus 20.

The vehicle speed data may be provided by a vehicle speed sensor which is generally known as such. Alternatively, the vehicle speed data may be provided by a navigation system. This is also generally known as such.

Subsequently, the vehicle heating system 12 is caused to heat the windshield 17 or front window and the rear window 19, i.e. a portion of the outer surface 11 of the vehicle 10, based on the vehicle speed data.

In more detail, the windshield 17 or front window and the rear window 19 are heated, if the traveling speed exceeds a predefined speed threshold. The predefined speed threshold is stored on the data storage unit 26.

In the present example, the travelling speed threshold may relate to a speed of 50 km/h. Consequently, the windshield 17 or front window and the rear window 19 are heated, if the vehicle 10 travels at a speed exceeding 50 km/h.

In this context, a reference temperature for the front heating element 16 and the rear heating element 18 is a function of the traveling speed. In other words, if the traveling speed is increased, also the reference temperature for the front heating element 16 and the rear heating element 18 is increased.

In a variant, a reference heating power for the front heating element 16 and the rear heating element 18 is used instead of the reference temperature.

As before, ambient air in a boundary layer of air adjacent to the windshield 17 or front window and to the rear window 19 is heated via the windshield 17 or front window at the rear window 19. This reduces the density of the air in the boundary layer which has the effect that drag of the vehicle 10 is reduced.

In a third use case, vehicle speed prediction data is received at the data processing apparatus 20. The vehicle speed prediction data is indicative of a future traveling speed of the vehicle 10. In the present example, the vehicle speed prediction data is received from a navigation system. Based on a user input indicating a traveling destination and a route which is calculated by the navigation system, the navigation system calculates a speed profile. In the present example, the portion of the calculated speed profile which relates to the future forms the vehicle speed prediction data.

Subsequently, the vehicle heating system 12 is caused to heat the windshield 17 or front window and the rear window 19 as a function of the received vehicle speed prediction data.

Thus, as before, ambient air in a boundary layer of air adjacent to the windshield 17 or front window and to the rear window 19 is heated via the windshield 17 or front window and the rear window 19. This reduces the density of the air in the boundary layer which has the effect that drag of the vehicle 10 is reduced.

It is noted that even though the above three use cases have been presented separately, it is of course also possible to combine some or all of these use cases.

Furthermore, all of the above use cases have in common that the vehicle heating system 12 is used for reducing drag of the vehicle 10 comprising the vehicle heating system 12.

It is noted that the above explanations relate to a vehicle 10 having a windshield 17 and a rear window 19 which may be heated. It is understood that these explanations apply analogously to other vehicles being configured to heat additional or alternative parts of an outer surface such as a side window.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

LIST OF REFERENCE SIGNS

10 vehicle
11 outer surface
12 vehicle heating system
14 window heating system
16 front heating element
17 windshield
18 rear heating element
19 rear window
20 data processing apparatus
22 data processing unit
24 data storage unit
26 computer-readable storage medium
28 computer program
30 means for carrying out a method for reducing drag of a vehicle

D forward driving direction
$F_{Drag}$ drag force

**Claims**

1. A method for reducing drag ($F_{Drag}$) of a vehicle (10), the method comprising causing a vehicle heating system (12) to heat at least a portion of an outer surface (11) of the vehicle (10).

2. The method of claim 1, wherein the vehicle heating system (12) comprises a window heating system (14).

3. The method of claim 2, wherein the window heating system (14) comprises a heating element (16, 18) attached to a window (17, 19) of the vehicle (10) or at least partially integrated into a window of the vehicle (10).

4. The method of any one of the preceding claims, further comprising
   - receiving ambient temperature data being indicative of an ambient temperature, and
   - causing the vehicle heating system (12) to heat the at least one portion of the outer surface (11) of the vehicle (10) to a temperature exceeding the ambient temperature.

5. The method of any one of the preceding claims, further comprising
   - receiving vehicle speed data being indicative of a traveling speed of the vehicle (10), and
   - causing the vehicle heating system (12) to heat the at least one portion of the outer surface (11) of the vehicle (10) based on the vehicle speed data.

6. The method of claim 5, wherein causing the vehicle heating system (12) to heat the at least one portion of the outer surface (11) of the vehicle (10) based on the vehicle speed data comprises causing the vehicle heating system (12) to heat the at least one portion of the outer surface (11) of the vehicle (10) if the traveling speed exceeds a predefined speed threshold.

7. The method of claim 5 or 6, wherein causing the vehicle heating system (12) to heat the at least one portion of the outer surface (11) of the vehicle (10)

based on the vehicle speed data comprises increasing a reference temperature of the vehicle heating system and/or a reference heating power of the vehicle heating system (12) as a function of the vehicle speed data.

8. The method of any one of the preceding claims, further comprising

    - receiving vehicle speed prediction data being indicative of a future traveling speed of the vehicle (10), and
    - causing the vehicle heating system (12) to heat the at least one portion of the outer surface (11) of the vehicle (10) based on the vehicle speed prediction data.

9. A data processing apparatus (20) comprising means (30) for carrying out the method of any one of the preceding claims.

10. A vehicle heating system (12, 14) configured to be integrated into a vehicle (10) and comprising a data processing apparatus (20) according to claim 9.

11. A computer program (28) comprising instructions which, when the computer program (28) is executed by a computer, cause the computer to carry out the method of claims 1 to 8.

12. A computer-readable storage medium (26) comprising instructions which, when executed by a computer, cause the computer to carry out the method of claims 1 to 8.

13. A use of a vehicle heating system (12) for reducing drag ($F_{Drag}$) of a vehicle (10) comprising the vehicle heating system (12).

14. The use of claim 13, wherein the vehicle heating system (12) is a window heating system (14).

15. The use of claim 14, wherein the window heating system (14) comprises a heating element (16, 18) attached to a window of the vehicle (10) or at least partially integrated into a window of the vehicle (10).

**Amended claims in accordance with Rule 137(2) EPC.**

1. A method for reducing drag ($F_{Drag}$) of a vehicle (10), the method comprising

    - causing a vehicle heating system (12) to heat at least a portion of an outer surface (11) of the vehicle (10),

**characterized in that**
the vehicle heating system (12) comprises a window heating system (14).

2. The method of claim 1, wherein the window heating system (14) comprises a heating element (16, 18) attached to a window (17, 19) of the vehicle (10) or at least partially integrated into a window of the vehicle (10).

3. The method of any one of the preceding claims, further comprising

    - receiving ambient temperature data being indicative of an ambient temperature, and
    - causing the vehicle heating system (12) to heat the at least one portion of the outer surface (11) of the vehicle (10) to a temperature exceeding the ambient temperature.

4. The method of any one of the preceding claims, further comprising

    - receiving vehicle speed data being indicative of a traveling speed of the vehicle (10), and
    - causing the vehicle heating system (12) to heat the at least one portion of the outer surface (11) of the vehicle (10) based on the vehicle speed data.

5. The method of claim 4, wherein causing the vehicle heating system (12) to heat the at least one portion of the outer surface (11) of the vehicle (10) based on the vehicle speed data comprises causing the vehicle heating system (12) to heat the at least one portion of the outer surface (11) of the vehicle (10) if the traveling speed exceeds a predefined speed threshold.

6. The method of claim 4 or 5, wherein causing the vehicle heating system (12) to heat the at least one portion of the outer surface (11) of the vehicle (10) based on the vehicle speed data comprises increasing a reference temperature of the vehicle heating system and/or a reference heating power of the vehicle heating system (12) as a function of the vehicle speed data.

7. The method of any one of the preceding claims, further comprising

    - receiving vehicle speed prediction data being indicative of a future traveling speed of the vehicle (10), and
    - causing the vehicle heating system (12) to heat the at least one portion of the outer surface (11) of the vehicle (10) based on the vehicle speed prediction data.

**8.** A data processing apparatus (20) comprising means (30) for carrying out the method of any one of the preceding claims.

**9.** A vehicle heating system (12, 14) configured to be integrated into a vehicle (10) and comprising a data processing apparatus (20) according to claim 8.

**10.** A computer program (28) comprising instructions which, when the computer program (28) is executed by a computer, cause the computer to carry out the method of claims 1 to 7.

**11.** A computer-readable storage medium (26) comprising instructions which, when executed by a computer, cause the computer to carry out the method of claims 1 to 7.

**12.** A use of a vehicle heating system (12) for reducing drag ($F_{Drag}$) of a vehicle (10) comprising the vehicle heating system (12), wherein the vehicle heating system (12) is a window heating system (14).

**13.** The use of claim 12, wherein the window heating system (14) comprises a heating element (16, 18) attached to a window of the vehicle (10) or at least partially integrated into a window of the vehicle (10).

Fig. 1

Europäisches
Patentamt

European
Patent Office

Office européen
des brevets

**EUROPEAN SEARCH REPORT**

Application Number

EP 23 17 8009

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/073840 A1 (CHENNUBOINA SIVA RAMA KRISHNA [IN]) 26 April 2018 (2018-04-26) | 1-4,8-15 | INV. B62D35/00 |
| Y | * claim 1; figures 1,2,4-6 * | 7 | |
| A | * page 6, line 15 – line 21 * | 5,6 | |
| | ----- | | |
| X | WO 96/07565 A2 (PRIMLANI INDRU [US]) 14 March 1996 (1996-03-14) | 1,2,5,6, 8-14 | |
| Y | * figures 1,2 * * page 2, line 17 – page 4, line 2 * | 7 | |
| | ----- | | |
| A | SHIN JAEWOOK ET AL: "Vehicle Speed Prediction Using a Markov Chain With Speed Constraints", IEEE TRANSACTIONS ON INTELLIGENT TRANSPORTATION SYSTEMS, IEEE, PISCATAWAY, NJ, USA, vol. 20, no. 9, 1 September 2019 (2019-09-01), pages 3201-3211, XP011742954, ISSN: 1524-9050, DOI: 10.1109/TITS.2018.2877785 [retrieved on 2019-08-27] * abstract * ----- | 8 | TECHNICAL FIELDS SEARCHED (IPC) B62D B60J B60H |

The present search report has been drawn up for all claims

| Place of search | Date of completion of the search | Examiner |
|---|---|---|
| The Hague | 1 November 2023 | Altmann, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
......................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 8009

01-11-2023

| Patent document cited in search report | | Publication date | Patent family member(s) | | Publication date |
|---|---|---|---|---|---|
| WO 2018073840 | A1 | 26-04-2018 | NONE | | |
| WO 9607565 | A2 | 14-03-1996 | AU | 3502095 A | 27-03-1996 |
| | | | US | 5617608 A | 08-04-1997 |
| | | | WO | 9607565 A2 | 14-03-1996 |

For more details about this annex : see Official Journal of the European Patent Office, No. 12/82